# EUROPEAN PATENT APPLICATION

(11) **EP 1 551 163 A2**
(43) Date of publication of application: **06.07.2005**
(21) Application number: 04029933.1
(22) Date of filing: 17.12.2004
(51) Int. Cl.: H04M 3/42, H04M 7/00, H04M 3/527, H04L 29/06, H04L 12/58

(54) **Presence-based routing in a communications network environment**

(30) Priority: 31.12.2003 US 750795; 06.02.2004 US 542573 P; 12.10.2004 US 962792
(71) Applicant: ALCATEL, 75008 Paris (FR)
(72) Inventor: Ozugur, Timucin, TX 75042 Garland (US); Wengrovitz, Michael, 01742 Concord Massachusetts (US)
(74) Representative: Schäfer, Wolfgang, Dipl.-Ing.

(57) **Abstract**

A presence-based routing (PBR) system and method in a communications network environment. Upon establishing presence awareness among a plurality of networked entities, a contact list is provided for a particular networked party based on presence information. When an incoming communication request intended for the particular networked party is received and that particular networked party is unavailable, a PBR functionality is operable to select a party from the contact list based on suitable contact selection logic for forwarding the communication request thereto.

## Description

### BACKGROUND OF THE INVENTION

### Technical Field of the Invention

The present invention generally relates to presence-aware communication networks. More particularly, and not by way of any limitation, the present invention is directed to a presence-based routing system and method in a communications network environment.

### Description of Related Art

With today's widespread use of the Internet as a major communication medium, data communication devices are now being designed so that they are capable of communicating over packet-switched networks. For instance, telephones, pagers, personal digital assistant devices, cell phones, handheld computers, and even fax machines can now be accessed and controlled from the Internet. Communication over a packet-switched network using communication devices that traditionally communicate over a circuit-switched telecommunications network is generally known as network telephony, or IP telephony when an IP network is involved.

Various types of user communication devices (e.g., a cell phone, laptop or handheld PC, desktop PC, and the like) can identify themselves to the network using a suitable identifier (e.g., username@company.com). "Presence" refers to, for example, the availability, proximity, activity level or operating state of a user or device on a network. The ability for users to monitor each other's presence is a feature offered in connection with many applications that support network telephony. For example, instant messaging (IM) applications such as MSN®, Yahoo®, et cetera, have an "available buddy" feature, in which a user of the application can determine whether select users are available for engaging in communication. The data retrieved and returned to the buddy list, e.g. "John OFFLINE" or "Susan ACTIVE", is known as "presence information," and is generally maintained by a presence server in the data network, often a dedicated server. Typically, the presence server supports network protocols such as the Session Initiation Protocol (SIP). Users can register their communication devices with the presence server in order to have their presence maintained and to allow various programs on the network to facilitate network telephony services. A first device user wishing to detect the presence of a second device user does so by "subscribing" with the presence server, such as via a SIP SUBSCRIBE message. The presence server intermediates between the first device user (also known as the watcher or subscriber) and the second device user to facilitate the communication of the second device user's presence information to the first device user.

Additional details concerning presence and presence data modeling are set forth in the Internet Engineering Task Force (IETF) Request for Comment (RFC) 2778 entitled "A model for Presence and Instant Messaging," dated February 2002; RFC 2779 entitled "Instant Messaging / Presence Protocol Requirements," dated February 2002; and Internet-Draft identified as <<draft-schulzrinne-simple-rpids-01.ps>> and entitled "RPIDS - Rich Presence Information Data Format for Presence Based on the Session Initiation Protocol (SIP)," dated February 18, 2003, which are incorporated herein by reference.

Although presence applications have been implemented in a variety of settings such as those exemplified hereinabove, one area that remains deficient in terms of presence is customization of call treatment using presence information. Currently, telephony experience involving conventional phone sets consists of dialing a destination number or called number and experiencing either a busy signal, ring with no answer, or ring with forwarding to voice mail, or ring and pickup followed by conversation, et cetera. It would be beneficial if the called party, especially, a networked party in an enterprise, could influence the treatment of the incoming call based on its own unavailability as well as the availability of a select number of other workers in the enterprise.

### SUMMARY OF THE INVENTION

In one aspect, the present invention is directed to a presence-based routing method operable in a communications network environment. Initially, presence awareness is established among a plurality of networked parties, wherein each party is provided with a first communication device operably coupled to a first network and with a second communication device operably coupled to a second network, the second network operating to facilitate communication of presence information relating to the networked parties. One or more contacts (i.e., a contact list) and contact selection logic are provisioned for a particular networked party based on the presence information of the contacts, wherein the list of contacts is comprised of at least a portion of remaining parties. Upon receiving a communication request from an originating party over the first network, wherein the communication request is intended to be directed to the particular networked party, the communication request is forwarded to at least one contact of the list of contacts based on the contact selection logic, contact presence data, and user preferences and options associated with the particular networked party.

In another aspect, the present invention is directed to a presence-based routing system operable in a communications network environment. A suitable presence application is provided for establishing presence awareness among a plurality of networked parties, wherein each party is provided with a first communication device operably coupled to a first network and with a second communication device operably coupled to a second network, the second network operating to facilitate communication of presence information relating to the networked parties. A database and logic structure module is provided for supporting a list of contacts and contact selection logic for a particular networked party based on the presence information of the contacts, wherein the list of contacts is comprised of at least a portion of remaining parties. Logic structure is included for forwarding a communication request to at least one contact of the list of contacts based on the contact selection logic, presence data and user preferences, upon receiving the communication request from an originating party over the first network, wherein the communication request is intended to be directed to the particular networked party that is unavailable.

In yet another aspect, the present invention is directed to a system for routing calls based on presence and user preference options. A plurality of phones are operable to form a phone network, wherein each phone is provided with a routing manager that is operable to process presence information associated with the phones and a set of user-defined routing preferences for an incoming call. A presence server may be operably connected to the plurality of phones for collecting presence information for each phone. Alternatively, the presence server may directly receive the presence information of the phones from a switch itself. A mechanism provided with the switch is operable for re-routing an incoming call from a calling party to a first phone in response to a request generated by the first phone's routing manager, wherein the request for transferring the incoming call includes information as to a second phone selected based on the second phone's presence information and at least a portion of user preference options relative to the incoming call.

### BRIEF DESCRIPTION OF THE DRAWINGS

The accompanying drawings are incorporated into and form a part of the specification to illustrate one or more presently preferred exemplary embodiments of the present invention. Various advantages and features of the invention will be understood from the following Detailed Description taken in connection with the appended claims and with reference to the attached drawing figures in which:

FIG. 1 depicts an embodiment of a communications network environment wherein a communication request can be re-routed based on presence information in accordance with the teachings of the present invention;

FIG. 2 depicts a functional block diagram of a computing/communication device having the presence-based routing (PBR) functionality according to an embodiment of the present invention;

FIG. 3 is a flow chart of the operations involved in an embodiment of the present-based routing methodology of the present invention;

FIG. 4 depicts a message flow diagram for implementing an exemplary enterprise-level embodiment of the presence-based routing methodology of the present invention; and

FIGS. 5A and 5B depict renditions of screen shots associated with two exemplary embodiments of the present invention.

### DETAILED DESCRIPTION OF THE DRAWINGS

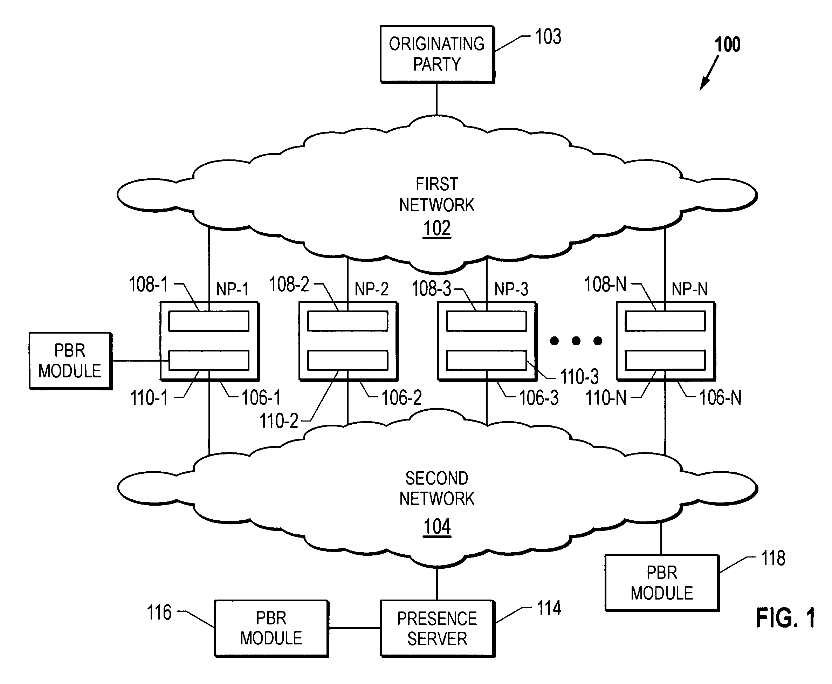

Embodiments of the invention will now be described with reference to various examples of how the invention can best be made and used. Like reference numerals are used throughout the description and several views of the drawings to indicate like or corresponding parts, wherein the various elements are not necessarily drawn to scale. Referring now to the drawings, and more particularly to FIG. 1, depicted therein an embodiment of a communications network environment 100 wherein a communication event or a request relating thereto can be re-routed based on presence information in accordance with the teachings of the present invention. As illustrated, the communications network environment 100 is comprised of a first network 102 and a second network 104, wherein an originating party 103 is operable to initiate the communication event request (or, simply "communication request" or "request") over one of the networks, e.g., the first network 102, for delivery to an intended networked party that is networked to both first and second networks. By way of example, a plurality of networked parties NP-1 106-1 through NP-N 106-N are operable to access the first network 102, each using a suitable first communication device, 108-i, i = 1, 2, ..., N. Likewise, NP-1 106-1 through NP-N 106-N are also operable to access the second network 102, each using a suitable second communication device 110-i, i = 1, 2, ..., N.

At the outset, it should be realized by those skilled in the art that for purposes of the present invention, the first and second networks may comprise any known or heretofore unknown telecommunications or data communications networks, either private or public, as long as one of them, e.g., the second network 104, is capable of operating as a presence-aware network. Accordingly, the first network 102 can be a network selected from the group consisting of an enterprise communications network, e.g., a digital Private Branch Exchange (PBX) network, at least a portion of a public circuit-switched voice communications network such as the Public Switched Telephone Network (PSTN), or a packet-switched network, e.g., an Internet Protocol (IP)-based network. In terms of the type of communications that can be supported, it is envisaged that the first network 102 is capable of supporting voice communications, video communications, data communications, text message communications, electronic mail (email) communications, multimedia communications, or any combination or combinations thereof. As a consequence, the term "communication request" used in reference to a communication event initiated by the originating party 103 should be construed broadly and can include any communication event relating to the communication types exemplified herein (e.g., voice calls, video calls, text messages, email messages, multimedia calls, et cetera). Correspondingly, the first communication devices 108-1 to 108-N associated with the networked parties may comprise wireline telephones, wireless telephones, PBX digital phones, video phones, text messaging devices, Voice-over-IP (VoIP) or web phones, and the like, depending on particular network implementation and application.

As alluded to in the foregoing, the second network 104 is preferably operable as a presence-aware network wherein presence information relating to the networked parties and associated communication devices may be collected and shared using any presence-capable network protocol. By way of example, the second network may be implemented as an IP-based network that is operable with a presence application protocol selected from the group consisting of SIP, Extensible Messaging and Presence Protocol (XMPP), IBM Sametime protocol, and so on. Furthermore, the second network 104 may comprise a local area network, wide area network, an enterprise intranet network, or a public packet-switched network such as the Internet. Accordingly, the second communication devices 110-1 to 110-N associated with the networked parties may comprise a computing/communication device such as, e.g., a desktop or laptop personal computer, although any hardware platform operable with a presence application may be provided as part of the second network 104 within the context of the present invention. Additionally, in a further embodiment, the first and second communication devices associated with a networked party may be integrated into a single device, e.g., equipment that supports computer telephony integration (CTI), with which the networked parties may access both first and second networks. For instance, additional details regarding integration of PBX phones and presence-capable computer equipment may be found in the following co-pending commonly assigned United States nonprovisional patent application entitled: "CLIENT-BASED INTEGRATION OF PBX AND MESSAGING SYSTEMS," Application No.: 10/750,795, filed December 31, 2003, in the name(s) of Michael S. Wengrovitz, cross-referenced hereinabove.

To facilitate presence information collection and sharing, a presence server 114 may be provided as part of the second network 104. In one embodiment, the presence information relates to the presence state/data of the networked parties and associated communication devices (e.g., "OFFLINE"; "ONLINE"; "OUT TO LUNCH"; "BUSY"; "IDLE"; "ON PHONE"; ''IN CONFERENCE"; "WITH CUSTOMER"; "KEYBOARD INACTIVE"; "CALL WAITING"; "OFF-HOOK"; "RINGING", et cetera) that is helpful in determining whether a networked party or its communication device is available for establishing a connection with respect to an incoming communication request generated by the originating party 103. Presence-based routing or re-routing (PBR) logic may be provisioned in the communications network environment 100 either in a centralized manner (e.g., as a separate network node or as a co-located module associated with a network switch or a presence server) or by way of a distributed arrangement wherein the PBR logic may be partitioned across one or more network entities, i.e., communication devices associated with the networked parties, or in any combination thereof. As illustrated, PBR module 112 is illustrative of an embodiment where the PBR logic is provided as an application operating in conjunction with the computing/communication device 110-1 of one particular networked party, i.e., NP-1 106-1. PBR module 116 exemplifies the provisioning of the PBR logic as a co-located entity operable in conjunction with the presence server 114. On the other hand, PBR module 118 exemplifies the provisioning of the PBR logic as a separate network node disposed in the second network 104. Although not explicitly shown in FIG. 1, those skilled in the art will recognize that the PBR functionality may also be provisioned as part of a network switch associated with the first network 102 (e.g., as a CTI-enhanced PBX node).

Regardless of where or how the PBR logic is provisioned in the communications network environment 100, the logic is operable to facilitate customized treatment with respect to any incoming communication request, mediated through presence information as well as user preferences and options. In one embodiment, the PBR logic is operable responsive to the presence/availability status of one or more networked parties that are established as contact members of a particular networked party (e.g., NP-1 106-1) to which an incoming communication request is intended to be directed. When it is detected or designated that NP-1 106-1 is busy or otherwise unavailable, a contact selection logic process associated with NP-1 is invoked whereby a contact member is selected based upon its presence to which the communication request is re-routed. As alluded to before, a set of user preferences configurably associated with NP-1 106-1 may be interfaced with the contact selection logic so as to further refine the process of determining an appropriate networked party as the contact member for re-routing. Those skilled in the art will readily recognize that the re-routing process may be facilitated via one or more switching nodes associated with the first network 102 (e.g., a PBX in an enterprise network such as a call center network) over which the communication request is received, although the communication request may have been originated in a separate network altogether. Additionally, it should be further appreciated that the overall PBR functionality in conjunction with contact selection and/or user preference mediation is amenable to numerous applications, configurations, modifications, enhancements, et cetera. As a simple example, the user preferences associated with NP-1 106-1 may be predetermined or dynamically defined, and may comprise call treatment options based on the contents/type/nature of the incoming communication request, day/date/time stamp information of the request, identity of the originating party, and so on. Determination of contact members for NP-1 106-1 may be effectuated automatically or manually, and the contact selection logic may involve multi-level resolutions resulting in a hierarchical, prioritized decision-making process. For instance, if a selected contact member is unavailable when the communication request is re-routed or if such member declines to accept the request, another contact member may be selected by the contact selection logic, either from a predetermined hierarchical list of contact members or via a new decision-making process. In a yet further variation, an arbitration process - which can be based on presence and quality of presence - may also be implemented where two or more contact members become available for servicing a re-routed communication request.

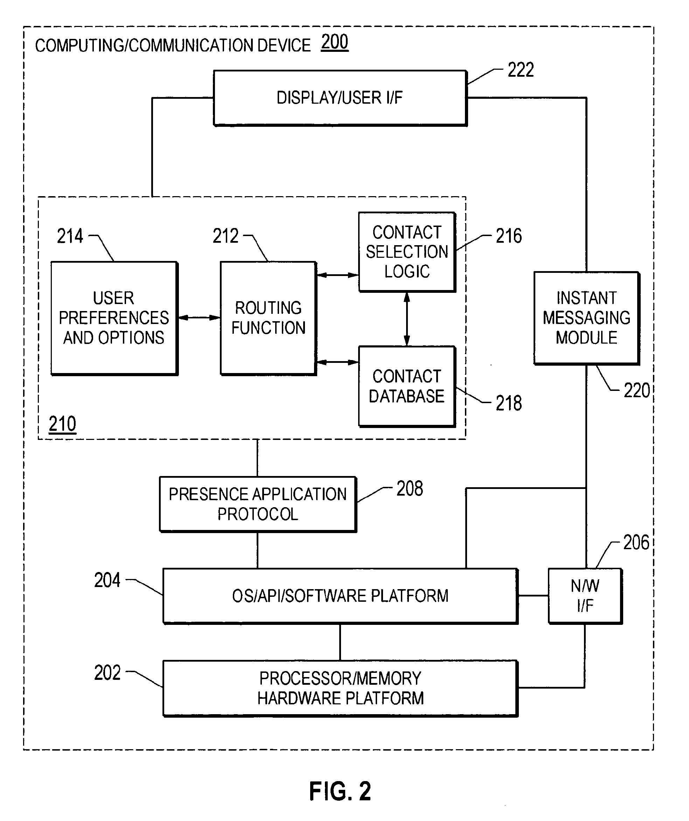

FIG. 2 depicts a functional block diagram of a computing/communication device 200 having the presence-based routing (PBR) functionality according to an embodiment of the present invention. By way of implementation, device 200 may be provided as a communication device associated with a networked party for accessing the presence-aware network 104 of the communications network environment 100 described above. A processor/memory block 202 having any known or heretofore unknown architecture forms the hardware platform of the device 200. Operable thereon is a software platform 204 comprising an Operating System (OS) and suitable suite of application programming interfaces (APIs). Also provided is a network interface 206 for effectuating communication over the presence-aware network. A presence application protocol module 208 is illustrative of a network protocol stack (e.g., a SIP stack) adapted for transmitting and receiving presence information. An instant messaging (IM) module 220 is illustrative of known IM applications operable to provide IM services.

A PBR module 210 includes a routing function 212 that is operably coupled to a contact selection logic module 216, a contact list or database 218 and a database of user preferences and options 214. As explained in the foregoing discussion, the contact selection logic 216 may be dynamically configurable, and can involve real-time input from the user (i.e., the networked party intending to re-route communication requests). Further, the user preferences/options database 214 and contact list database 218 may be populated in a number of ways. A display and/or user interface 222 is provided for supporting appropriate GUI-based dialog boxes and menus that facilitate user interaction.

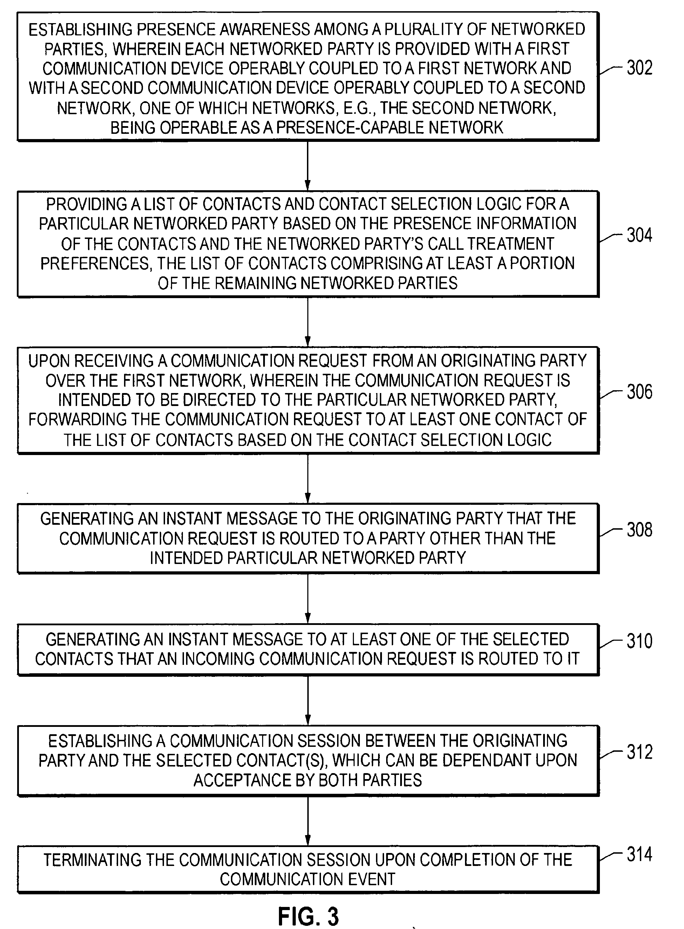

FIG. 3 is a flow chart of the operations involved in an embodiment of the presence-based routing methodology of the present invention. Initially, presence awareness is established among a plurality of networked parties, wherein each networked party is provided with a first communication device operably coupled to a first network and with a second communication device operably coupled to a second network, one of which networks, e.g., the second network is being operable as a presence-capable network (block 302). A list of contacts and contact selection logic is provided for a particular networked party based on the presence information of the contacts and the networked party's call treatment preferences/options (block 304). Upon receiving a communication request from an originating party over the first network, wherein the communication request is intended to be directed to the particular networked party, the PBR functionality is invoked for resolving one or more contacts (or, none, as the case may be) in conjunction with the contact selection logic in order to re-route the communication request. Thereafter, the communication request is accordingly forwarded, which may be mediated via a switching node associated with the first network (block 306).

An instant message may be generated by the PBR functionality of the particular networked party towards the originating party that the communication request is routed or re-routed to a party other than the intended particular networked party (block 308). Also, another instant message may be directed to the selected contact or contacts that an incoming communication request is routed thereto (block 310). A communication event/session pursuant to the incoming communication request may then be established between the originating party and the selected contact(s), which can be conditionally dependent upon acceptance by both parties (block 312). The communication session is subsequently terminated upon completion of the communication event (block 314).

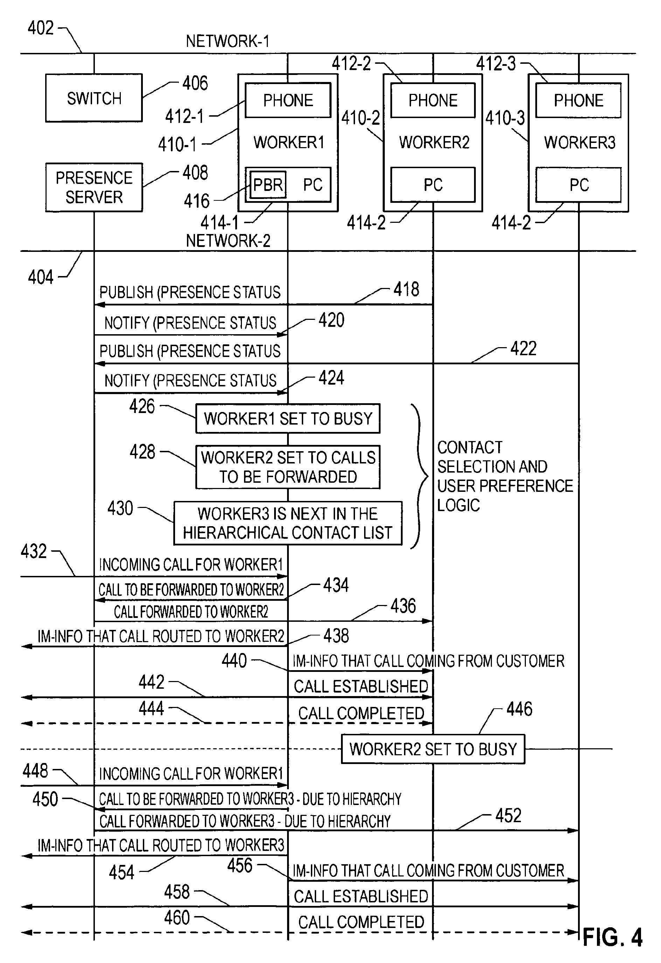

FIG. 4 depicts a message flow diagram for implementing an exemplary enterprise-level embodiment of the presence-based routing methodology of the present invention, wherein three networked parties, Worker1 410-1, Worker2 410-2 and Worker3 410-3 are exemplified. Network-1 402 including a switch 406 is provided to be an enterprise-level digital phone network, e.g., a PBX network having a PBX switch, wherein each of the networked parties is equipped with a PBX phone. Reference numerals 412-1, 412-2 and 412-3 refer to the three phones associated with Workers 410-1, 410-2 and 410-3, respectively. Network-2 404 including a presence server 408 is operable as the enterprise's IP-based network adapted for collecting, communicating and establishing presence information, wherein each networked party is equipped with a personal computer (PC) for interfacing with Network-2 404. In particular, reference numerals 414-1, 414-2 and 414-3 refer to the three IM-capable PCs associated with Workers 410-1, 410-2 and 410-3, respectively, where Workerl's PC 414-1 is also equipped with a routing module 416 that is operable to execute the PBR functionality discussed above.

As part of establishing presence awareness in the network, Workers publish their presence status to the presence server 408 by means of suitable messaging. In response thereto, the presence server 408 provides presence status information to the watcher, which in this scenario is Worker1 410-1. As illustrated, Worker2 410-2 and Worker3 410-3 who provide their presence status via PUBLISH 418 and PUBLISH 422 messages are deemed to be contacts for Worker1 410-1. NOTIFY messages 420, 424 are provided to Worker1 410-1 by the presence server 408 for establishing presence awareness.

Thereafter, presence status associated with Worker1 410-1 is set to busy (to signify unavailability) as indicated by reference numeral 426. As part of configuring its contact selection logic, Worker1 410-1 establishes a hierarchical contact list where Worker2 410-2 is given a higher priority over Worker3 410-3. Reference numerals 428 and 430 refer to these actions, respectively.

When an incoming call 432 for Worker1 410-1 is received in Network-1 402, PBR module 416 transmits a request 434 to switch 406 that the call is to be forwarded to Worker2 410-2. Responsive thereto, switch 406 re-routes the call to Worker2 410-2 as indicated by reference numeral 436. Also, an IM 438 is provided by the PBR module 416 to the call originating party to inform that the call is routed to Worker2 410-2. Another IM 440 is directed to Worker2 410-2 to inform that a call is coming from the originating party, e.g., a customer of the enterprise. Thereafter, a call session 442 is established between Worker2 410-2 and the originating party. Subsequent to completion of the call, the call session may be terminated as indicated by reference numeral 444.

When Worker2 is unavailable for whatever reason, e.g., during call session 442, its presence status is set to busy (as indicated by reference numeral 446), which presence information is provided to the watchers via the presence server 408 for updating. Accordingly, when there is another incoming call 448 for Worker1 410-1, PBR module 416 transmits a request 450 to switch 406 that the call is to be forwarded to Worker3 410-3, the next available contact in the hierarchical contact list. Responsive thereto, switch 406 re-routes the incoming call to Worker3 410-3 as indicated by reference numeral 452. IM 454 and IM 456 are generated towards the originating party and Worker3 410-3, respectively, to indicate that the call is re-routed. Call session 458 and call termination 460 follow thereafter.

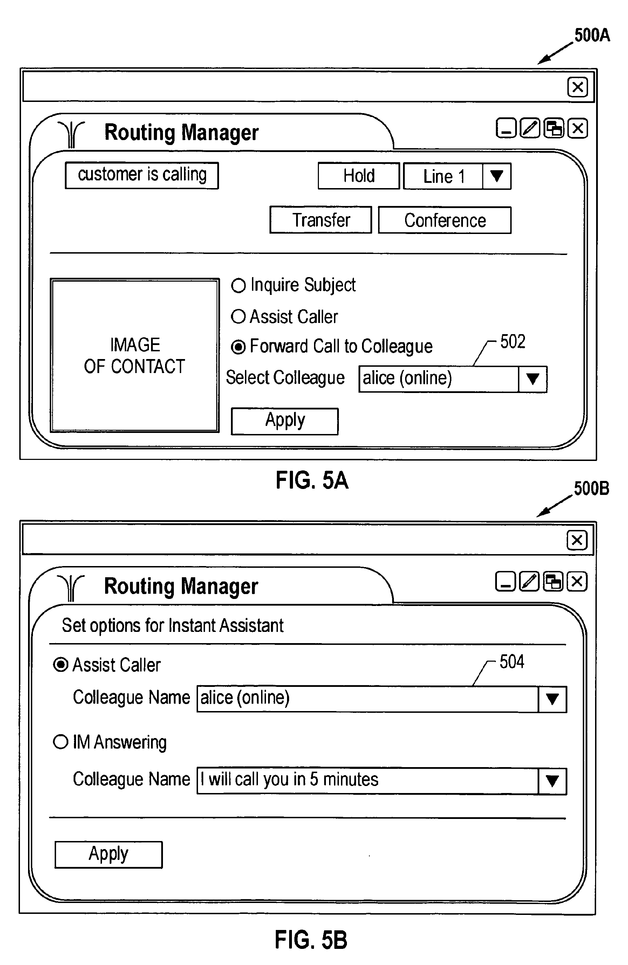

FIGS. 5A and 5B depict screen shots associated with execution of the PBR logic according to two exemplary embodiments of the present invention, wherein the PBR logic is implemented as a routing manager associated with a phone, PC, or an integrated communication device, disposed in an enterprise network. Reference numeral 500A refers to a GUI-based dialog box provided for facilitating manual selection of a contact to whom an incoming communication request is to be re-routed. A particular contact can be selected from a predetermined list of contacts whose presence information is made available to the PBR functionality, as indicated by reference numeral 502. Once a particular contact is selected on-the-fly, the incoming call is re-routed accordingly.

Reference numeral 500B refers to a GUI-based dialog box provided for facilitating automatic selection of a contact from a contact list to whom an incoming communication request is to be re-routed when an intended party sets its presence status as busy or away. Presence information relating to the selected contact is made available to the PBR functionality (as indicated by reference numeral 504), depending on whatever updates in the presence data are made. Regardless of whether a contact is selected manually or automatically, the PBR functionality interfaces with the presence server if the presence information is stored and delivered in a centralized manner. Otherwise, the PBR functionality is operable to employ a peer-to-peer delivery mechanism to collect presence information and establish presence awareness among the contacts.

Based on the foregoing Detailed Description, it should be appreciated that the present invention advantageously provides a presence-based routing mechanism that enhances call treatment in a number of ways by supporting customization by a called party in a networked environment. Value propositions such as efficient re-routing, servicing calls based on contact member expertise, etc., may be enabled, particularly in enterprises such as call centers and the like.

The following method/s and/or method steps as well as the following system/s and/or system features, separately or in any combination, also constitute advantageous embodiments of the claimed and/or described invention:
- The claimed and/or described presence-based routing method operable in a communications network environment, wherein said IP-based network comprises a wide area network operable with a protocol selected from the group consisting of Session Initiation Protocol (SIP), Extensible Messaging and Presence Protocol (XMPP) and IBM Sametime protocol;
- The claimed and/or described presence-based routing method operable in a communications network environment, wherein said IP-based network comprises an enterprise intranet network operable with a protocol selected from the group consisting of Session Initiation Protocol (SIP), Extensible Messaging and Presence Protocol (XMPP) and IBM Sametime protocol;
- The claimed and/or described presence-based routing method operable in a communications network environment, wherein said IP-based network comprises a public packet-switched network operable with a protocol selected from the group consisting of Session Initiation Protocol (SIP), Extensible Messaging and Presence Protocol (XMPP) and IBM Sametime protocol;
- The claimed and/or described presence-based routing method operable in a communications network environment, wherein said communication request is related to at least one of voice communication, video communication, data communication, text message communication, electronic mail communication, and multimedia communication;
- The claimed and/or described presence-based routing method operable in a communications network environment, wherein said contact selection logic provides for hierarchical prioritization of said list of contacts;
- The claimed and/or described presence-based routing method operable in a communications network environment, wherein said contact selection logic is operable responsive to a set of call treatment preferences associated with said particular networked party;
- The claimed and/or described presence-based routing method operable in a communications network environment, wherein said set of call treatment preferences is based on contents of said communication request;
- The claimed and/or described presence-based routing method operable in a communications network environment, wherein said set of call treatment preferences is based on date stamp of said communication request;
- The claimed and/or described presence-based routing method operable in a communications network environment, wherein said set of call treatment preferences is based on time stamp of said communication request;
- The claimed and/or described presence-based routing method operable in a communications network environment, wherein said set of call treatment preferences is based on identity of said originating party;
- The claimed and/or described presence-based routing method operable in a communications network environment, wherein said set of call treatment preferences is dynamically configurable;
- The claimed and/or described presence-based routing method operable in a communications network environment, wherein said list of contacts is established automatically;
- The claimed and/or described presence-based routing method operable in a communications network environment, wherein said list of contacts is established manually;
- The claimed and/or described presence-based routing method operable in a communications network environment, wherein said list of contacts is updated periodically;
- The claimed and/or described presence-based routing method operable in a communications network environment, wherein said contact selection logic permits manual selection by said particular networked party of said at least one contact of said list of contacts;
- The claimed and/or described presence-based routing method operable in a communications network environment, wherein said contact selection logic permits automatic selection of said at least one contact of said list of contacts;
- A presence-based routing system operable in a communications network environment, comprising: means for establishing presence awareness among a plurality of networked parties, wherein each party is provided with a first communication device operably coupled to a first network and with a second communication device operably coupled to a second network, said second network operating to facilitate communication of presence information relating to said networked parties; database and logic structure means for supporting a list of contacts and contact selection logic for a particular networked party based on said presence information, wherein said list of contacts is comprised of at least a portion of remaining parties; and means for forwarding a communication request to at least one contact of said list of contacts based on said contact selection logic upon receiving said communication request from an originating party over said first network, wherein said communication request is intended to be directed to said particular networked party;
- The claimed and/or described presence-based routing system operable in a communications network environment, further comprising: means for generating an instant message to said originating party that said communication request is routed to a party other than said particular networked party; means for generating an instant message to said at least one contact that an incoming communication request from said originating party is routed thereto; and means for establishing a communication session between said originating party and said at least one contact;
- The claimed and/or described presence-based routing system operable in a communications network environment, wherein said first network comprises a network selected from the group consisting of a Private Branch Exchange (PBX) network, a Public Switched Telephone Network (PSTN) and an Internet Protocol (IP)-based network;
- The claimed and/or described presence-based routing system operable in a communications network environment, wherein said first communication device comprises a device selected from the group consisting of wireline telephones, wireless telephones, PBX digital phones, video phones, text messaging devices, and Voice-over-IP (VoIP) phones;
- The claimed and/or described presence-based routing system operable in a communications network environment, wherein said second network comprises a Internet Protocol (IP)-based network;
- The claimed and/or described presence-based routing system operable in a communications network environment, wherein said IP-based network comprises a local area network operable with a protocol selected from the group consisting of Session Initiation Protocol (SIP), Extensible Messaging and Presence Protocol (XMPP) and IBM Sametime protocol;
- The claimed and/or described presence-based routing system operable in a communications network environment, wherein said IP-based network comprises a wide area network operable with a protocol selected from the group consisting of Session Initiation Protocol (SIP), Extensible Messaging and Presence Protocol (XMPP) and IBM Sametime protocol;
- The claimed and/or described presence-based routing system operable in a communications network environment, wherein said IP-based network comprises an enterprise intranet network operable with a protocol selected from the group consisting of Session Initiation Protocol (SIP), Extensible Messaging and Presence Protocol (XMPP) and IBM Sametime protocol;
- The claimed and/or described presence-based routing system operable in a communications network environment, wherein said IP-based network comprises a public packet-switched network operable with a protocol selected from the group consisting of Session Initiation Protocol (SIP), Extensible Messaging and Presence Protocol (XMPP) and IBM Sametime protocol;
- The claimed and/or described presence-based routing system operable in a communications network environment, wherein said communication request is related to at least one of voice communication, video communication, data communication, text message communication, electronic mail communication, and multimedia communication;
- The claimed and/or described presence-based routing system operable in a communications network environment, wherein said contact selection logic provides for hierarchical prioritization of said list of contacts;
- The claimed and/or described presence-based routing system operable in a communications network environment, wherein said contact selection logic is operable responsive to a set of call treatment preferences associated with said particular networked party;
- The claimed and/or described presence-based routing system operable in a communications network environment, wherein said set of call treatment preferences is based on contents of said communication request;
- The claimed and/or described presence-based routing system operable in a communications network environment, wherein said set of call treatment preferences is based on date stamp of said communication request;
- The claimed and/or described presence-based routing system operable in a communications network environment, wherein said set of call treatment preferences is based on time stamp of said communication request;
- The claimed and/or described presence-based routing system operable in a communications network environment, wherein said set of call treatment preferences is based on identity of said originating party;
- The claimed and/or described presence-based routing system operable in a communications network environment, wherein said set of call treatment preferences is dynamically configurable;
- The claimed and/or described presence-based routing system operable in a communications network environment, wherein said list of contacts is established automatically;
- The claimed and/or described presence-based routing system operable in a communications network environment, wherein said list of contacts is established manually;
- The claimed and/or described presence-based routing system operable in a communications network environment, wherein said list of contacts is updated periodically;
- The claimed and/or described presence-based routing system operable in a communications network environment, wherein said contact selection logic permits manual selection by said particular networked party of said at least one contact of said list of contacts;
- The claimed and/or described presence-based routing system operable in a communications network environment, wherein said contact selection logic permits automatic selection of said at least one contact of said list of contacts;
- The claimed and/or described system for routing calls based on presence and user preference options, wherein said set of user-defined routing preferences is based at least in part upon one of said incoming call's contents, said calling party's identity, and time and date stamping data associated with said incoming call;
- The claimed and/or described system for routing calls based on presence and user preference options, wherein said presence server is connected to said plurality of phones for receiving presence information therefrom;
- The claimed and/or described system for routing calls based on presence and user preference options, wherein said presence server is connected to said switch for receiving presence information relating to said phones.

Although the invention has been described with reference to certain exemplary embodiments, it is to be understood that the forms of the invention shown and described are to be treated as exemplary embodiments only. Accordingly, various changes, substitutions and modifications can be realized without departing from the spirit and scope of the invention as defined by the appended claims.

## Claims

1. A presence-based routing method operable in a communications network environment, comprising:
establishing presence awareness among a plurality of networked parties, wherein each party is provided with a first communication device operably coupled to a first network and with a second communication device operably coupled to a second network, said second network operating to facilitate communication of presence information relating to said networked parties;
providing a list of contacts and contact selection logic for a particular networked party based on said presence information, wherein said list of contacts is comprised of at least a portion of remaining parties; and
upon receiving a communication request from an originating party over said first network, wherein said communication request is intended to be directed to said particular networked party, forwarding said communication request to at least one contact of said list of contacts based on said contact selection logic.

2. The presence-based routing method operable in a communications network environment as recited in claim 1, further comprising:
generating an instant message to said originating party that said communication request is routed to a party other than said particular networked party;
generating an instant message to said at least one contact that an incoming communication request from said originating party is routed thereto; and
establishing a communication session between said originating party and said at least one contact.

3. The presence-based routing method operable in a communications network environment as recited in claim 2, wherein said first network comprises a network selected from the group consisting of a Private Branch Exchange (PBX) network, a Public Switched Telephone Network (PSTN) and an Internet Protocol (IP)-based network.

4. The presence-based routing method operable in a communications network environment as recited in claim 2, wherein said first communication device comprises a device selected from the group consisting of wireline telephones, wireless telephones, PBX digital phones, video phones, text messaging devices, and Voice-over-IP (VoIP) phones.

5. The presence-based routing method operable in a communications network environment as recited in claim 2, wherein said second network comprises a Internet Protocol (IP)-based network.

6. The presence-based routing method operable in a communications network environment as recited in claim 5, wherein said IP-based network comprises a local area network operable with a protocol selected from the group consisting of Session Initiation Protocol (SIP), Extensible Messaging and Presence Protocol (XMPP) and IBM Sametime protocol.

7. A system for routing calls based on presence and user preference options, comprising:
a plurality of phones forming a phone network, wherein each phone is provided with a routing manager that is operable to process presence information associated with said phones and a set of user-defined routing preferences for an incoming call;
a presence server operable for collecting presence information for each phone; and
a switch for re-routing an incoming call from a calling party to a first phone in response to a request generated by said first phone's routing manager, said request for transferring said incoming call including information as to a second phone selected based on said second phone's presence information and at least a portion of user preference options relative to said incoming call.

8. The system for routing calls based on presence and user preference options as recited in claim 7, wherein said phone network comprises a Private Branch Exchange (PBX) network and said switch for re-routing an incoming call comprises a PBX switch.

9. The system for routing calls based on presence and user preference options as recited in claim 7, wherein said first phone includes an instant messaging function operable to provide an instance message to said calling party to indicate that said incoming call is re-routed to said second phone.

10. The system for routing calls based on presence and user preference options as recited in claim 7, wherein said first phone includes an instant messaging function operable to provide an instance message to said second phone to indicate that said incoming call originated by said calling party is re-routed thereto.

11. The system for routing calls based on presence and user preference options as recited in claim 7, wherein said set of user-defined routing preferences comprises a hierarchical listing of phones from which said second phone is selected based on said second phone's presence information.
